# EUROPEAN PATENT SPECIFICATION

(11) **EP 3 938 330 B1**
(45) Date of publication and mention of the grant of the patent: **14.02.2024**
(21) Application number: 20817996.0
(22) Date of filing: 22.05.2020
(51) Int. Cl.: C03C 8/14, C03C 8/20, C03C 8/04, C03C 8/16, C03C 8/10

(54) **GLASS FRIT SYSTEM INCLUDING DARK-COLORED, LOW EXPANSION FILLERS**
GLASFRITTE ENTHALTEND DUNKEL GEFÄRBTE FÜLLSTOFFE MIT GERINGER EXPANSION
FRITTE COMPRENANT DES CHARGES À FAIBLE DILATATION DE COULEUR SOMBRE

(30) Priority: 05.06.2019 US 201962857302 P
(43) Date of publication of application: 19.01.2022
(73) Proprietor: Ferro Corporation, Mayfield Heights, OH 44124 (US)
(72) Inventor: AXTELL, Enos, A., Seven Hills, OH 44131 (US); MALONEY, John, J., Solon, OH 44139 (US); GLEASON, Cody, J., Solon, OH 44139 (US); SRIDHARAN, Srinivasan, Strongsville, OH 44136 (US); SAKOSKE, George, E., Independence, OH 44131 (US)
(74) Representative: Gille Hrabal Partnerschaftsgesellschaft mbB Patentanwälte
(86) International application number: PCT/US2020/034228
(87) International publication number: WO 2020/247194

(56) References cited:
- EP-A2- 1 818 997
- US-A- 5 089 445
- US-A- 5 721 802
- US-A1- 2009 247 385
- US-A1- 2016 052 820

## Description

### BACKGROUND

Glass frit systems are applied to various substrates and fired thereon to form an enamel that is bonded to the surface of the substrate. The fired enamel may be used to modify a characteristic, e.g. the appearance, of the substrate. If the coefficient of thermal expansion (CTE) of the fired enamel does not closely match that of the substrate, a significant interfacial stress will develop between the enamel and the substrate during the cooling cycle of the enamel firing process. This interfacial stress may cause a degradation in the bond between the enamel and the substrate, and may cause the enamel to craze, fracture, or de-bond from the substrate.

Ferro Corporation and other companies have long practiced the use of CTE modifiers, additives whose primary purpose is to enable modification of the enamel's overall CTE while minimizing its effect on the other enamel properties or the required firing profile. These additives serve to reduce the CTE difference between the substrate and the enamel, and therefore reduce the interfacial stress. This reduced CTE difference helps enhance the strength and durability of the enamel-substrate bonding because of the resulting reduced interfacial stress.

Glass frit systems for firing can be composed of glass frits, pigments, modifiers including CTE modifiers, and various other components such as fillers. The glass frit systems are formulated to give acceptable performance properties in terms of adhesion, appearance, strength, and durability. The fusion and flow properties of the glass frit systems are typically dominated by the glass frit components. However, modifiers, pigments, and fillers can interact with the glass components during the firing and affect the enamel's properties. These components often increase the required enamel firing temperature, which can be detrimental to the substrate upon which the enamel is formed. Therefore, novel approaches to formulate new glass frit systems that reduce the detrimental effects of the components on the enamel properties are beneficial.

In general, the glasses used in glass frit systems can aggressively attack, leach, or dissolve the other components to some degree during the enamel firing process. This affects primarily the surface of the glass particles, typically inhibiting their fusion and flow characteristics. The dissolution rate of the components within the glass frit system will depend on the chemistry, structure, surface area, and morphology of the components. Given the same chemistry for the components, larger specific surface areas and rougher surface textures will increase the dissolution rate of the components. Likewise, higher temperature enamel firing processes and longer soak times during firing will promote more dissolution of the components. Therefore, the choice of the specific components, the amount used, their particle size distributions, and their morphologies can affect the overall firing and performance of the enamel. US5721802 A discloses a glass frit system comprising a vehicle, a glass frit, and a CTE modifier being a modified magnesium pyrophosphate of the generic formula 2(Co,Mg)O·P2O5. US5089445 A discloses mill additions for glass frit systems containing magnesium pyrophosphate modified with various ions, including Zn ions.

Many glass frit systems include pigments to modify the color of the fired enamels. In these cases, incorporation of conventional white or off-white CTE modifiers (i.e. "non-colored CTE modifiers") to the glass frit systems results in changes the color values of the enamel in two ways. First, by diluting the percentage of pigment in the enamel, i.e. producing hue-changing; and second, by the light scattering produced by the whitish particles. These effects primarily increase the lightness of the enamel, i.e. increase the L-value. The L-value correlates to the lightness-darkness scale of the CIE Lab color system.

In order to counter this lightening and hue-changing effect from an addition of a conventional CTE modifier on the enamel color, the amount of pigment in the glass frit system may have to be increased. Unfortunately, any increase in the amount of pigment included in the glass frit system may have a significant negative impact on various characteristics (e.g. further increase the flow temperature) of the glass frit system or of the fired enamel.

### BRIEF DESCRIPTION

According to one aspect, a glass frit system for forming an enamel adhered to a substrate includes a vehicle, a glass frit, a colored CTE modifier, and optionally one or more pigments. The colored CTE modifier includes (i) a modified Pseudo-Brookite type material having a formula Al₂TiO₅, wherein Al and/or Ti are partially substituted with one or more coloring ions including Fe, Cr, Mn, Co, Ni, and Cu; (ii) a modified Cordierite type material having a formula Mg₂Al₄Si₅O₁₈, wherein Mg and/or Al is partially substituted with one or more of the coloring ions; (iii) a Perovskite type material having a formula Sm₁₋ₓSrₓMnO_{3-δ}, where x=0.0-0.5 and δ=0.0-0.25, or a modified version of the Perovskite type material wherein Sr is partially substituted with Ba and/or Ca; or combinations thereof.

According to another aspect, method of forming an enameled substrate includes the steps of providing a substrate; providing a glass frit system including a vehicle, glass frit, a colored CTE modifier, and a pigment; applying the glass frit system to the substrate; and firing the glass frit system to thereby form a colored enamel adhered to the substrate. The colored CTE modifier includes (i) a modified Pseudo-Brookite type material having a formula Al₂TiO₅, wherein Al and/or Ti are partially substituted with one or more coloring ions including Fe, Cr, Mn, Co, Ni, and Cu; (ii) a modified Cordierite type material having a formula Mg₂Al₄Si₅O₁₈, wherein Mg and/or Al are partially substituted with one or more of the coloring ions; (iii) a Perovskite type material having a formula Sm₁₋ₓSrₓMnO_{3-δ}, where x=0.0-0.5 and δ=0.0-0.25, or a modified version of the Perovskite type material wherein Sr is partially substituted with Ba and/or Ca; or combinations thereof.

### BRIEF DESCRIPTION OF THE DRAWINGS

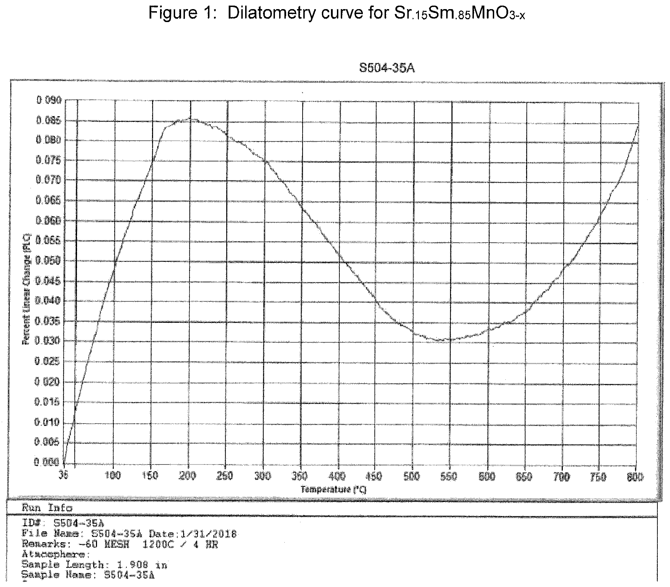

FIG. 1 is a dilatometry curve for Sr_{.15}Sm_{.85}MnO₃₋ₓ.

### DETAILED DESCRIPTION

The formulation of enamels for such purposes as decoration on various substrates is challenging. Generally, a glass frit with a softening point below that of the desired substrate must be selected in order to minimize substrate distortion during the enamel firing process. However, a glass frit possessing a low softening point usually also has a high coefficient of linear thermal expansion (CTE) and poor acid durability. Additions can be made to the glass frit to address these concerns, but oftentimes all of the desired characteristics needed for an enamel cannot be met by the glass frit alone. The need for CTE-matching of the enamel to the substrate can in theory be met by the addition of CTE modifiers into the glass frit system. Three examples of conventional additives for the purpose of reducing the CTE of a fired glass enamel are β-Eucryptite (LiAlSiO₄), fused quartz (SiO₂), and Cordierite (Mg₂Al₄Si₅O₁₈).

In some cases, such as for metal substrates like aluminum, the CTE of the glass enamel must typically be increased to match that of the substrate. Cristobalite, a crystalline form of silica with a large CTE, is sometimes used in such applications.

CTE modifiers are typically white or off-white in color. This property can be detrimental in achieving a desired enamel color, especially when black and other dark enamels are desired, while at the same time meeting other enamel requirements.

To address this concern, the present invention employs colored CTE modifiers produced by full or partial substitution of suitable metal ion chromophores (i.e. chromophoric cations or coloring ions) for one or more of the CTE modifier's original compositional ion components (i.e. original or substituted ions). For example, Cr(lll) ions typically have similar ionic radii and coordination environments to Al(III) ions, and can be partially substituted as substitution ions into Al sites of Al₂O₃-corundum to form a red-ruby-colored CTE modifier not according to the invention. Similar substitutions can also be accomplished in CTE modifiers such as Al₂TiO₅.

Some of the useful CTE modifiers occur as naturally occurring oxide minerals. However, the naturally occurring low-CTE minerals such as cordierite and tialite, typically lack a sufficient amount of chromophoric cations to produce a useful coloring effect, and often contain such chromophoric cations only at contamination levels (i.e. below 0.05 % substitution of the original ion), thus resulting in CTE modifiers having nearly white or off-white colors. With the advent of X-ray diffraction and chemical analysis techniques, it is possible to synthesize color-saturated, "clean" colored CTE modifiers based on chromophore-substituted versions of these minerals. Color optimization of the CTE modifiers is typically achieved by increasing the amounts and combinations of desired chromophoric ions and minimizing other impurities and secondary phases (i.e. secondary crystal structures).

In the present invention, the colored CTE modifiers are added to a glass frit system, such as an ink or paste to be fired on a substrate, in order to modify the CTE of the resulting fired enamel.

However, the CTE modifiers included in the glass frit system of this invention are highly colored compared to their naturally occurring counterparts, and therefore do not reduce the coloring effect from the pigment components on the enamels as much as the addition of conventional non-colored CTE modifiers. In many cases, in order to produce a desired coloring level in the enamel, the amount of the pigment component can be reduced due to the use of the colored CTE modifiers. This may be beneficial to the appearance and other enamel properties by reducing the crystalline-amorphous grain boundaries within the fired enamel that would ordinarily be present between the fired glass and the pigment. In addition, reduced pigment levels may advantageously reduce the enamel's flow temperature.

The invention is defined in the appended independent claims. Preferred embodiments are defined in the appended dependent claims. The colored CTE modifiers included in the glass frit system of the present invention may be used to fully or partially replace a conventional combination of white-colored CTE modifiers and dark colored (e.g. black) pigments in a glass frit system. The colored CTE modifier may include a modified Pseudo-Brookite structure material having a formula Al₂TiO₅ (tialite), wherein Al and/or Ti sites are partially substituted with one or more coloring ions. The coloring ions may include Fe, Cr, Mn, Co, Ni, and Cu. The colored CTE modifiers may include a modified Cordierite type material having a formula Mg₂Al₄Si₅O₁₈, wherein Mg and/or Al ions in the material are partially substituted with one or more of the coloring ions. The colored CTE modifiers may include a Perovskite type material having a formula Sm₁₋ₓSrₓMnO_{3-δ}, where x=0.0-0.5 and δ=0.0-0.25; or the Perovskite type material modified by the substitution of coloring ions in the crystal structure. The colored CTE modifiers may include a modified ZrSiO₄ material with appropriate chromophoric cation substitutions (not according to the present invention). The colored CTE modifiers may include combinations of these materials, as defined in appended claim 1.

There are several considerations that may be relevant in choosing appropriate chromophoric ions as substitutes in the various CTE modifiers, including the ionic radius, compatibility, and charge of the chromophoric cations. Suitable chromophoric cations may have a similar ionic radius as the substituted ions. The chromophoric cations may have an ionic radius that is +/- 0.2Å compared to the substituted ions for tetrahedral and octahedral sites, and larger ranges of +/- 0.3 Å for higher coordination sites. The chromophoric cations may be compatible for substitution, i.e. capable of residing in the site's coordination environment. The chromophoric cations may also provide charge balance for the CTE modifiers, such as in scenarios that the chromophoric cations have a charge that is equal to the substituted ions. Alternatively, where the chromophoric cations have a charge that is different than the substituted ions, co-substitution ions may also be used so that the total charge of the chromophoric cations and co-substituted ions equals the charge of the substituted ions. In this case, another ion with a different charge may be substituted with the chromophoric cations for charge balancing purposes.

In the simplest case, Al₂O₃, Cr₂O₃, and Fe₂O₃ are isostructural and can all form solid solutions with each other. As such, Cr(III) and Fe(lll) can typically be used as direct substitutions for Al(III) octahedral sites in non-colored CTE modifiers. Likewise, CTE modifiers with spinel AB₂O₄ structures are very amenable to ion substitutions in both their tetrahedral and octahedral sites, and in fact a number of cations can occupy either spinel site. Pigments based on doped-rutile structures demonstrate some routes to charge balancing by co-substitution, where a partial Cr(III) substitution can be balanced with an equal Sb(V) substitution to form solid solutions such as Cr_{.03}Sb_{.03}Ti_{.94}O₂ with an average formal cation charge being 4. Likewise, charge balancing of the CTE modifiers can also be accomplished with partial substitution of F anions at oxide sites. Finally, some colored CTE modifiers may have structures that can exist with various levels of oxygen vacancies. In these cases, the use of higher-valency cation co-substitutions may not be necessary.

Synthesis of the colored CTE modifiers typically includes a calcination process of an intimate mixture of raw materials that include a chromophoric component. The raw materials may include metal oxides, or compounds that convert to metal oxides during the calcination process, such as compounds including but not limited to metal hydroxides, metal carbonates, metal nitrates, and metal soaps (carboxylates). The term metal oxide is used here generically to represent any elemental oxide. The intimate mixture can be formed by a large variety of well-known blending and milling techniques. Likewise, the intimate mixture may be calcined in a wide variety of kilns, furnaces, and other heating techniques, including but not limited to box kilns, tunnel kilns, rotary kilns, and microwave furnaces. Multiple calcinations can be used, with or without intermittent milling, to enhance formation of the desired phase, but generally are restricted to single calcinations for industrial economic purposes.

Calcined colored CTE modifiers may or may not need sieving or to be ground to a finer size before incorporation into an glass frit system, depending on the fired particle size distribution and the process used for the enamel preparation. Any conventional milling technique can be used, including jet milling, attritor milling, bead milling, and ball milling,

### Pseudo-Brookite Colored CTE Modifiers

Tialite (Al₂TiO₅) is a mineral which has the Pseudo-Brookite (PBrookite) structure (Fe₂TiO₅) and a CTE of 14 × 10⁻⁷/°C. The CTE of Tialite is virtually identical to the CTE of Cordierite (Mg₂Al₄Si₅O₁₈), which is commonly used as a non-colored CTE modifier in enamels. Al₂TiO₅ is a white-colored compound that can be synthesized by calcination of AIO(OH) with TiO₂ at 1450°C. Both the AI(III) and Ti(IV) cations occupy octahedral sites in this structure.

The colored CTE modifiers included in the glass frit system of the present invention include a modification of tialite, where transition metal chromophoric cations can be substituted in one or both of the Al(III) and Ti(IV) ion sites in tialite, since a number of these metal chromophoric cations have similar ionic radii to AI(III) and Ti(IV) ions and are compatible with the coordination geometry and size requirements of octahedral sites in the lattice. Applicable chromophoric cations suitable for substitution with the AI(III) and/or (Ti(IV) ions include ions of Fe(III), Cr(III), Mn(II), Mn(III), Mn(IV), Co(II), Ni(II), and Cu(II). In some cases, co-substitutions of the AI(III) and/or (Ti(IV) ions with higher valence cations such as Sb(V), Nb(V), Mo(VI), and W(VI) may be necessary to maintain charge balancing of the modified structure.

The more common transition metal chromophoric cations that are compatible with the coordination geometry and size requirements of octahedral sites may include metal ions with a net charge of 2+ or 3+, denoted herein M(II) and M(III) ions. Substitution of AI(III) with appropriate chromophoric M(III) cations would not require any charge balancing. Substitution at both the Al and Ti ion sites in Al₂TiO₅ can produce a more saturated color in the colored CTE modifier, but substitution of M(II) or M(III) ions on the Ti site may require a co-substitution of higher valency cations to maintain charge balance.

Colored PBrookite structured materials can be formulated based on compounds with the formulas Al₂₋ₓMₓTiO₅ or Al₂MₓTi₁₋ₓO₅, where "x" is the stoichiometric substitution amount and M is the chromophoric ion or ions i.e. Fe, Cr, Mn, Co, Ni, Cu). Since the Al and Ti sites are both octahedral sites, some mixed sight occupancy is expected in both cases, which is not uncommon in mixed metal oxides, but the substitutions should be controlled primarily by the formulated stoichiometry. Table 1 below shows the useful, preferred, and most preferred ranges for the formula amount "x" of the various ions to be used in place of Al in the PBrookite structure formula, and ΣM represents the summation of multiple cation substitutions. In Table 1, the lower limit for "x" may be 0.01, 0.1, or more.

**Table 1: x-values for Al₂₋ₓMₓTiO₅ formulation**

| M | Useful Range | Preferred | Most Preferred |
|---|---|---|---|
| Fe | 0-2.0 | 0.0-1.9 | 0.0-1.8 |
| Cr | 0-1.2 | 0.0-1.0 | 0.0-1.0 |
| Mn | 0-1.6 | 0.0-1.4 | 0.0-1.2 |
| Co | 0-1.6 | 0.0-1.4 | 0.0-1.2 |
| Ni | 0-1.6 | 0.0-1.4 | 0.0-1.2 |
| Cu | 0-1.6 | 0.0-1.4 | 0.0-1.2 |
| ΣM | 0-2.0 | 0.1-1.9 | 0.2-1.8 |

Table 2 below shows suitable "x" ranges for various ions to be used in place of Ti in the formulated PBrookite structured material. The colored CTE modifier product will have a formula of Al₂MₓTi₁₋ₓO₅ where "M" is the chromophoric substitution ion i.e. Fe, Cr, Mn, Co, Ni, Cu), and ΣM again represents the summation of multiple ion substitutions. For each coloring ion used, a "hyper-valent" ion may be needed for charge balancing since M(II) and M(III) ions are replacing Ti(IV) ions. The hyper-valent ions may be chosen from Nb⁵⁺, Mo⁶⁺, W⁶⁺, P⁵⁺, As⁵⁺, and Sb⁵⁺, preferably Nb⁵⁺, Mo⁶⁺, W⁶⁺, and Sb⁵⁺, and most preferably Nb⁵⁺, Mo⁶⁺, and W⁶⁺. In Table 2, the lower limit for "x" may be 0.01, 0.1, or more.

**Table 2: x-values for Al₂MₓTi₁₋ₓO₅ formulation**

| M | Useful Range | Preferred | Most Preferred |
|---|---|---|---|
| Fe | 0-1.0 | 0-1.0 | 0.1-1.0 |
| Cr | 0-0.8 | 0-0.6 | 0.1-0.5 |
| Mn | 0-0.8 | 0-0.6 | 0.1-0.5 |
| Ni | 0-0.8 | 0-0.6 | 0.1-0.5 |
| ΣM | 0-1.0 | 0-1.0 | 0.1-1.0 |

### Cordierite Based CTE Modifiers

The colored CTE modifiers may include modified materials from the Cordierite family, typified by such members as Beryl (Al₂Be₃Si₆O₁₈), Cordierite (Mg₂Al₄Si₅O₁₈), and Benitoite (BaTiSi₃O₉ or Ba₂Ti₂Si₆O₁₈). Colored, low-CTE modifiers may be obtained by partial or complete substitution of the various chemical components by appropriate metal cations.

The high compositional flexibility of the Beryl/Cordierite/Benitoite structures may allow substitutions to produce the colored CTE modifiers. The magnesium and aluminum sites are substituted by Fe, Cr, Co, Mn, Cu and Ni. If the original formula for Cordierite is considered, at a maximum, about 36% (4/11) of the metal ions are in a 3+ oxidation state. If at least four Si atoms per unit formula are needed to maintain the structure type, then it is possible that the Cordierite structure may not provide the most saturated colors. In this regard, the level of coloring ions in the structure may be increased by substituting two Si⁴⁺ ions with, for example, one Fe³⁺ and one P⁵⁺ ion, to produce the compound Mg₂Fe₆P₂SiO₁₈ having a Cordierite structure. This compound may be produced by calcining a mixture of Cordierite with raw material oxides, or by seeding methods so as to yield a compound of the desired structure with a more saturated color.

Table 3 below shows broad ranges for the formula amount "x" of various cations partially substituting in the Al sites of Cordierite. The resultant modified Cordierite-materials will have a formula of Mg₂₋ₓAl_{4-y}M_{x+y}Si₅O₁₈. The lower limit for "x+y" may be 0.01, 0.1, or more.

**Table 3: "x+y" values for Mg₂₋ₓAl_{4-y}M_{x+y}Si₅O₁₈**

| M | Useful Range | Preferred | Most Preferred |
|---|---|---|---|
| Fe | 0-3.0 | 0-2.8 | 0.0-2.5 |
| Cr | 0-3.0 | 0-2.8 | 0.0-2.5 |
| Mn | 0-3.0 | 0-2.8 | 0.0-2.5 |
| Co | 0-3.0 | 0-2.8 | 0.0-2.5 |
| Ni | 0-3.0 | 0-2.8 | 0.0-2.5 |
| Cu | 0-3.0 | 0-2.8 | 0.0-2.5 |
| ΣM | 0.1-3.0 | 0.2-2.8 | 0.5-2.5 |

### Perovskite-structured CTE Modifiers

The colored CTE modifier may also include a Perovskite type material, for example Sm_{0.85}Sr_{0.15}MnO_{3-δ}, where δ represents some degree of oxygen vacancy. The Perovskite type material may have a formula of Sm₁₋ₓSrₓMnO_{3-δ}, where x=0.0-0.5 and δ=0.0-0.25, or a modified version of the Perovskite type material wherein Sr is partially substituted with Ba and/or Ca.

This compound is black in color and can theoretically display a negative CTE behavior from approximately 90°C to 600°C. Solid state synthesis of this material from heating an intimate mixture of non-colored Perovskite type material and metal oxide and metal carbonate raw materials, resulted in a black powder that when pressed into bars exhibited a CTE of -66 × 10-7/°C from 200-360°C. The expansion curve is shown in Figure 1, showing the range of negative CTE values. The discrepancy between the tested CTE and the theoretical CTE are likely due to small amounts of secondary phases that were present in the product.

CTE modifies with other structural types, including Ca_{0.75}Sr_{0.25}Zr₄P₆O₂₄ (NZP), NaZr₂P₃O₁₂, Nb₂O₅, Zr₂P₂O₉, ZrW₂O₈, and Y₂(WO₄)₃, may be modified by substitution with coloring ions to produce a colored CTE modifier not according to the present invention.

### Examples

Table 4 shows the compositions of PBrookite-structured colored CTE modifier examples. In examples 1-11, the raw materials were intimately mixed and the intimate mixture was fired at high temperature to form the colored CTE modifiers. Comparative example 1 was fired at 1450°C for 60 hours to produce phase pure material. Partial substitution of Al with Fe, as in Examples 2 and 3, could be used to lower the firing temperature needed for synthesis to the range of 1350 to 1400°C. Substitutions of Cr for Al in any proportion without co-substitutions did not result in the formation of the PBrookite structure, as in Example 5. Provided that Al and Fe are present, Cr, Mn and Co can be added in attempts to neutralize the brown color of the materials from Examples 2 and 3. These doubly substituted trials appear as Examples 6 to 11 in Table 4.

**Table 4: Pseudo-Brookite Examples**

| Example | Formulation | Single Phase | Color |
|---|---|---|---|
| 1-comparative | Al₂TiO₅ | Yes | White |
| 2 | Al_{1.5}Fe_{0.5}TiO₅ | Yes | Brown |
| 3 | AIFeTiOs | Yes | Brown |
| 4 | Fe₂TiO₅ | Almost | Brown |
| 5 | AICrTiOs | No | |
| 6 | Al_{1.5}Fe_{0.4}Cr_{0.1}TiO₅ | Almost | Brown |
| 7 | Al_{1.5}Fe_{0.2}Cr_{0.3}TiO₅ | Almost | Brown |
| 8 | AlFe_{0.8}Cr_{0.2}TiO₅ | Almost | Brown |
| 9 | AlFe_{0.4}Cr_{0.6}TiO₅ | Almost | Brown |
| 10 | AlFe_{0.8}Mn_{0.2}TiO₅ | Almost | Brown |
| 11 | AlFe_{0.8}Co_{0.2}TiO₅ | Almost | Brown |

For reference, Table 5 below shows conventional CTE modifiers with their CTE values.

**Table 5: Literature CTE values of some non-colored CTE modifiers**

| CTE Modifier | CTE x10⁷ (C⁻¹) |
|---|---|
| Al₂TiO₅ | 14 |
| Cordierite (Mg₂Al₃Si₅O₁₈) | 14 |
| NaZr₂P₃O₁₂ | -4 |
| Mg₂P₂O₇ | As low as -246 |
| Zr₂P₂O₉ | 4 |
| Fused Silica | 5.4 |
| Zircon (ZrSiO₄) | 4.5 |

Most conventional CTE modifiers are slightly off-white and have L*=85-95 when read with specular reflectance excluded. Three synthetic non-colored CTE modifiers (i.e. with L*=85-95) are included in Table 5b as comparative examples. In contrast, many of the colored CTE modifiers of this invention exhibit L* values in the range of 20-65. L* values of reference black pigments are about 20 when read under the conditions of specular reflectance excluded. Based on this data, it is anticipated that the amount of pigment component in the enamel can be significantly reduced or eliminated with the use of colored CTE modifiers. To be useful, the colored CTE modifier should have L*<75 for dark colors or chroma C* >8 for brighter colors, where C*=√(a*²+b*²), preferably L*<70 or C*>10, and most preferably L*<65 or C*>12.

**Table 5b: Measured L* (packed powders, read specular excluded) and CTEs.**

| CTE Modifier | L* | CTE x10⁷ (C⁻¹) |
|---|---|---|
| LiAlSiO₄ (β-eucryptite) comparative example | 94.6 | |
| LiAl_{.5}Fe_{.5}SiO₄ | 43.0 | |
| Al₂TiO₅ (PBrookite comparative example | 92.9 | 20.1 |
| AlCr_{.2}Fe_{.8}TiO₅ | 53.5 | |
| AlCo_{.2}Fe_{.8}TiO₅ | 57.7 | |
| Mg₂Al₃Si₅O₁₈ (Cordierite) comparative example | 94.7 | 21.0 |
| Mg_{1.8}Al_{3.8}Fe_{.2}Co_{.2}Si₅O₁₈ | 64.9 | 37.0 |
| Perovskite (Sr_{.15}Sm_{.85}MnO₃₋ₓ) | 21.7 | -66.0 |
| V-774 (ref black pigment) | 21.9 | |
| 10335 (ref black pigment) | 18.0 | |

### Glass Frit Systems

Glass frit systems may be in the form of a paste, ink, or green body (e.g. a tape), which may be applied to a substrate and fired thereon to form an enamel that is adhered to the substrate. The glass frit system may include glass frit, a colored CTE modifier, pigment, a vehicle, and other components as desired.

### 1. Colored CTE Modifier

The colored CTE modifiers can be incorporated into the glass frit system in order to modify the CTE of the resulting fired enamel, so as to more closely match the CTE of the substrate. Moreover, the colored CTE modifier is itself colored, and therefore its addition may reduce the amount of pigment needed in order to produce a desired coloring effect for the enamel as compared to using a conventional non-colored CTE modifier. The colored CTE modifier may be included at 0.5-50 wt% of the total weight of the solids portion.

### 2. Glass Frit

The glass frit is not particularly limited, and may be included at 18-95 wt% of the glass frit system. The glass frits used are not critical, and a variety of lead-containing and lead-free glasses may be utilized.

As used herein, the term "glass frit" means pre-fused glass material which is typically produced by rapid solidification of molten material followed by grinding or milling to the desired powder size. Glass frits generally includes alkali metal oxides, alkaline earth metal oxides, silica, boric oxide, and other metal oxides.

Generally, the glass frit useful herein include a variety of generally categorized glasses, including Pb-Si glass, Pb-B glass, a Pb-B-Si glass, Pb-Bi-Si glass, a Pb-AI-Si glass, a phosphate glass, or lead free glasses such as lead-free Bi-Si glass; lead-free alkali-Si glass; lead free Zn-Si glass; lead free Zn-B glass; lead free alkaline earth-Si glass; and lead free Zn-B-Si glass, all of which may contain additional elemental oxides or halides. Combinations of the foregoing are also possible.

In one embodiment, the glass frit may include from 0 to about 75 weight percent lead oxide, from 0 to about 75 weight percent bismuth oxide, from 0 to about 75 weight percent silica, from 0 to about 50 weight percent zinc oxide, from 0 to about 40 weight percent boron oxide, from 0 to about 15 weight percent aluminum oxide, from 0 to about 15 weight percent zirconium oxide, from 0 to about 8 weight percent titanium oxide, from 0 to about 20 weight percent phosphorous oxide, from 0 to about 15 weight percent calcium oxide, from 0 to about 10 weight percent manganese oxide, from 0 to about 7 weight percent copper oxide, from 0 to about 5 weight percent cobalt oxide, from 0 to about 15 weight percent iron oxide, from 0 to about 20 weight percent sodium oxide, from 0 to about 20 weight percent potassium oxide, from 0 to about 15 weight percent lithium oxide and from 0 to about 7 weight percent fluoride, as well as other oxides conventionally used in glass frit compositions.

The following Tables 6-11 set forth glass frit compositions useful in the practice of the invention. An entry such as Li₂O + Na₂O + K₂O + Rb₂O means that Li₂O, Na₂O, K₂O, RbO₂ or any combination of them is present in the specified amount. Table 6 shows oxides amounts suitable for a bismuth and zinc frit.

**Table 6: ZnBi frits including the listed composition ranges (mole%):**

| Oxide | Range | Preferred | Most Preferred |
|---|---|---|---|
| Bi₂O₃ | 5-85 | 15-80 | 50-80 |
| SiO₂ | 1-70 | 2-45 | 15-35 |
| ZnO | 0-55 | 0.1-25 | 1-15 |
| V₂O₅ | 0-30 | 0.1-25 | 1-15 |

Table 7 shows oxides amounts suitable for a bismuth frit.

**Table 7: Bi frits including the listed composition ranges (mole%):**

| Oxide | Range | Preferred | Most Preferred |
|---|---|---|---|
| Bi₂O₃ | 5-65 | 5-55 | 10-40 |
| SiO₂ | 15-70 | 20-70 | 30-65 |
| B₂O₃ | 0-35 | 0.1-35 | 3-20 |
| Alkali oxides | 0-35 | 0.1-25 | 5-25 |

Table 8 shows oxides amounts suitable for a lead frit.

**Table 8: Pb frits including the listed composition ranges (mole%):**

| Oxide | Range | Preferred | Most Preferred |
|---|---|---|---|
| PbO | 15-75 | 25-66 | 30-64 |
| SiO₂ | 5-50 | 15-40 | 20-35 |
| ZnO | 0-50 | 5-35 | 20-33 |
| PbO + ZnO | 15-80 | - | - |

Table 9 shows oxides amounts suitable for an alkali-titanium-silicate (AlkTiSi) frit.

**Table 9: AlkTiSi frits including the listed composition ranges (mole%):**

| Oxide | Range | Preferred | Most Preferred |
|---|---|---|---|
| Li₂O+Na₂O+K₂O+Rb₂O₃ | 5-55 | 15-50 | 30-40 |
| TiO₂ | 2-26 | 10-26 | 15-22 |
| B₂O₃ + SiO₂ | 5-75 | 25-70 | 30-52 |
| V₂O₅ + Sb₂O₅ + P₂O₅ | 0-30 | 0.25-25 | 5-25 |
| MgO+CaO+BaO+SrO | 0-20 | 0-15 | 0-10 |
| F | 0-20 | 0-15 | 5-13 |

Table 10 shows oxides amounts suitable for a zinc frit.

**Table 10: Zn frits including the listed composition ranges (mole%):**

| Oxide | Range | Preferred | Most Preferred |
|---|---|---|---|
| ZnO | 5-65 | 7-50 | 10-32 |
| SiO₂ | 10-65 | 20-60 | 22-58 |
| B₂O₃ | 5-55 | 7-35 | 10-25 |

Table 11 shows oxides amounts suitable for another lead frit.

**Table 11: Pb frits including the listed composition ranges (mole%):**

| Oxide | Useful Range | Preferred | Most Preferred |
|---|---|---|---|
| PbO | 25-75 | 30-70 | 40-60 |
| SiO₂ | 20-50 | 25-45 | 30-40 |
| ZnO | 0-35 | 0-25 | 0-15 |
| Al₂O₃ | 0-15 | 0-10 | 0-5 |
| Ta₂O₅ | 0-5 | 0-3 | 0-2 |
| P₂O₅ | 0-5 | 0-5 | 0-5 |
| HfO₂+In₂O₃+Ga₂O₃ | 0-10 | 0-8 | 0-5 |
| ZrO₂ | 0-15 | 0-10 | 0-5 |
| B₂O₃ | 0-30 | 0-20 | 0-10 |
| Sb₂O₅ | 0-5 | 0-5 | 0-5 |
| TiO₂ | 0-20 | 0-15 | 0-10 |
| Bi₂O₃ | 0-25 | 0-20 | 0-15 |
| Nb₂O₅ | 0-5 | 0-5 | 0-5 |
| Alkali Glasses | 0-15 | 0-15 | 0-15 |

In any given embodiment, the frit need not contain all oxide ingredients, and various combinations are possible.

### 3. Vehicle

The vehicle may include solvents, binders, dispersants, and other common additives such as anti-settling and antifoam agents. The vehicle system may constitute 3.5-80 wt% of the glass frit system. The binder may include a resin, and typically impacts the rheological properties, green strength, or package stability for the compositions. The vehicle may include epoxies, polyesters, acrylics, cellulosics, vinyls, natural proteins, styrenes, polyalkyls, carbonates, rosins, rosin esters, alkyls, drying oils, and polysaccharides such as starches, guar, dextrins and alginates, and the like.

### 4. Pigment

The pigment is not particularly limited, and may be included at 1-50 wt% of the glass frit system. The pigment may be lead-free and cadmium-free compositions, and may include one or more pigments, including metal oxide pigments, carbon blacks, mixed-metal oxide pigments; metallic pigments, and others. The pigment may include the CICPs (Complex Inorganic Color Pigments (CICP's), including corundum-hematite, pyrochlore, rutile, zircon, spinel and other mineral based-structured pigments as outlined in the CPMA handbook, 4^{th} edition. Examples of commercially available black pigments include CuCr₂O₄, (Co,Fe)(Fe,Cr)₂O₄, and (NiMnCrFe)₃O₄ spinel pigments.

### 5. Additional Components

The glass frit system may include various additives or fillers such as crystalline material, reducing agents, dispersants/surfactants, rheological modifiers, flow aids, adhesion promoters, stabilizers, etc., as desired to modify characteristics of the glass frit system or fired enamel. When forming ceramic glazes, rather that glass enamels, other minerals such as kaolin or other silicate materials can be included.

Surfactants or dispersants aid in coating the substrate with the glass frit system and, in combination with particle size optimization, inhibits coalescing or clumping of the particles. If the particles are subjected to a particle size reduction operation, the dispersant can be added during size reduction to inhibit the particles from agglomerating together to form larger bodies.

### Methods

The invention can provide a substrate having fired enamel thereon, which fired enamel is produced by firing a glass frit system according to the invention. Any suitable substrate can be used in the subject invention. Examples of substrates include glass, ceramic, metal, or other non-porous substrates. Specific examples of substrates include an automotive glass substrate, architectural or structural glass, appliances and beverage containers. The fired coating may be a glass enamel or ceramic glaze, which may include glass frit and minerals such as kaolin or other silicate material and included on the surface of a tile.

To prepare the glass frit systems of the invention, glass frit is combined with the other components, including the vehicle and the colored CTE modifying component, and if necessary, a pigment to form a glass frit system in the form of a paste, ink, or green body.

Once the glass frit system is prepared, it is applied to the substrate by any suitable technique. The glass frit system can be applied by screen printing, decal application, spraying, brushing, roller coating, tape casting, or the like. Screen printing can be preferred when the glass frit system is in the form of a paste and is to be applied to a glass substrate.

After application of the glass frit system to a substrate in a desired pattern, the applied glass frit system is then fired to form an enamel adhered to the substrate to form a glass enamel or ceramic glaze. The firing temperature is generally dependent on the sintering temperature of the frit. Typically, the firing range is in the range of about 500°C to about 1500°C.

A substrate can be colored and/or decorated by applying any glass frit system described herein to at least a portion of the substrate. The substrate can be for example, a glass substrate such as a glass sheet, or automotive glass, (e.g., windshield). A glass frit system can be applied in the form of a paste as disclosed herein.

The glass frit system may be applied to the entire surface of a substrate, or to only a portion thereof, for example the periphery. The method involves forming an enameled or ceramic glazed substrate whereby the substrate and glass frit system applied thereto is heated to sinter the glass frit to the substrate and burn off any organic materials in the glass frit system.

The method may include further processing after the enamel is formed on the substrate, including heating and bending the substrate with the enamel thereon.

## Claims

1. A glass frit system for forming an enamel adhered to a substrate, including a vehicle, a glass frit, a colored CTE modifier, and optionally one or more pigments, the colored CTE modifier including:
a modified Pseudo-Brookite type material having a formula Al₂TiO₅, wherein Al and/or Ti are partially substituted with one or more coloring ions including Fe, Cr, Mn, Co, Ni, and Cu;
a modified Cordierite type material having a formula Mg₂Al₄Si₅O₁₈, wherein Mg and/or Al is partially substituted with one or more of the coloring ions;
a Perovskite type material having a formula Sm₁₋ₓSrₓMnO_{3-δ}, where x=0.0-0.5 and δ=0.0-0.25, or a modified version of the Perovskite type material wherein Sr is partially substituted with Ba and/or Ca;
or combinations thereof.

2. The glass frit system according to claim 1, wherein:
the CTE modifier includes the modified Pseudo-Brookite type material; and
the modified Pseudo-Brookite type material has a formula Al₂₋ₓMₓTiO₅, wherein M includes one or more of the coloring ions, and x is 0.1-2, or has a formula Al₂Ti₁₋ₓMₓO₅, where M includes one or more of the coloring ions and x is 0.01-0.4.

3. The glass frit system according to claim 1, wherein:
the CTE modifier includes the modified Cordierite type material; and
the modified Cordierite type material has a formula Mg₂₋ₓAl_{4-y}M_{x+y}Si₅O₁₈, wherein M is one or more of the coloring ions, and x+y is 0.1-3.0.

4. The glass frit system according to claim 1, wherein the CTE modifier includes the Perovskite type material having the formula Sm₁₋ₓSrₓMnO_{3-δ}.

5. The glass frit system according to claim 1, wherein relative to the total weight of the glass frit system:
the vehicle in included at 3.5-80 wt%,
the glass frit is included at 18.5-95 wt%,
the colored CTE modifier is included at 0.5-50 wt%, and
the pigment is included at 1-50 wt%.

6. The glass frit system according to claim 1, further including one or more of a filler, a reducing agent, a dispersant/surfactant, a rheological modifier, a flow aid, and adhesion promoter, or a stabilizer.

7. A method of forming an enameled substrate, comprising:
providing a substrate;
providing a glass frit system including a vehicle, glass frit, a colored CTE modifier, and a pigment, the colored CTE modifier including:
a modified Pseudo-Brookite type material having a formula Al₂TiO₅, wherein Al and/or Ti are partially substituted with one or more coloring ions including Fe, Cr, Mn, Co, Ni, and Cu;
a modified Cordierite type material having a formula Mg₂Al₄Si₅O₁₈, wherein Mg and/or Al are partially substituted with one or more of the coloring ions;
a Perovskite type material having a formula Sm₁₋ₓSrₓMnO_{3-δ}, where x=0.0-0.5 and δ=0.0-0.25, or a modified version of the Perovskite type material wherein Sr is partially substituted with Ba and/or Ca;
or combinations thereof;
applying the glass frit system to the substrate;
firing the glass frit system to thereby form a colored enamel adhered to the substrate.

8. The method according to claim 7, wherein:
the CTE modifier includes the modified Pseudo-Brookite type material; and
the modified Pseudo-Brookite type material has a formula Al₂₋ₓMₓTiO₅, wherein M includes one or more coloring ions, and x is 0.1-2.0, or has a formula Al₂Ti₁₋ₓMₓO₅, wherein M includes one or more of the coloring ions, and x is 0.01-0.4.

9. The method according to claim 7, wherein:
the CTE modifier includes the modified Cordierite type material; and
the modified Cordierite type material has a formula Mg₂₋ₓAl_{4-y}M_{x+y}Si₅O₁₈, wherein M is one or more of the coloring ions, and x+y is 0.1-3.0.

10. The method according to claim 7, wherein the CTE modifier includes the Perovskite type material having the formula Sm₁₋ₓSrₓMnO_{3-δ}.

11. The method according to claim 7, wherein relative to the total weight of the glass frit system:
the vehicle in included at 3.5-80 wt%,
the glass frit is included at 18.5-95 wt%,
the colored CTE modifier is included at 0.5-50 wt%, and
the pigment is included at 1-50 wt%.

12. The method according to claim 7, wherein the glass frit system further includes one or more of a filler, a reducing agent, a dispersant/surfactant, a rheological modifier, a flow aid, and adhesion promoter, or a stabilizer.

13. The method according to claim 7, wherein the substrate is glass.

## Patentansprüche

1. Glasfrittensystem zur Bildung eines an einem Substrat haftenden Emails, enthaltend ein Vehikel, eine Glasfritte, einen farbigen CTE-Modifikator und optional ein oder mehrere Pigmente, wobei der farbige CTE-Modifikator enthält:
ein modifiziertes Material vom Pseudo-Brookit-Typ mit der Formel Al₂TiO₅, wobei Al und/oder Ti teilweise durch ein oder mehrere färbende Ionen, einschließlich Fe, Cr, Mn, Co, Ni und Cu, substituiert sind;
ein modifiziertes Material vom Cordierit-Typ mit der Formel Mg₂Al₄Si₅O₁₈, wobei Mg und/oder Al teilweise mit einem oder mehreren der färbenden Ionen substituiert ist;
ein Material vom Perowskit-Typ mit der Formel Sm₁₋ₓSrₓMnO_{3-δ}, wobei x=0,0-0,5 und δ=0,0-0,25 ist, oder eine modifizierte Version des Materials vom Perowskit-Typ, wobei Sr teilweise durch Ba und/oder Ca substituiert ist;
oder Kombinationen davon.

2. Das Glasfrittensystem nach Anspruch 1, wobei:
der CTE-Modifikator das modifizierte Material vom Pseudo-Brookit-Typ enthält; und
das modifizierte Material vom Pseudo-Brookit-Typ eine Formel Al₂₋ₓMₓTiO₅ hat, wobei M eines oder mehrere der färbenden Ionen enthält und x 0,1-2 ist, oder eine Formel Al₂Ti₁₋ₓMₓO₅ hat, wobei M eines oder mehrere der färbenden Ionen enthält und x 0,01-0,4 ist.

3. Das Glasfrittensystem nach Anspruch 1, wobei:
der CTE-Modifikator das modifizierte Material vom Cordierit-Typ enthält; und
das modifizierte Material vom Cordierit-Typ die Formel Mg₂₋ₓAl_{4-y}M_{x+y}Si₅O₁₈ hat, wobei M eines oder mehrere der farbgebenden Ionen ist und x+y 0,1-3,0 ist.

4. Glasfrittensystem nach Anspruch 1, wobei der CTE-Modifikator das Material vom Perowskit-Typ mit der Formel Sm₁₋ₓSrₓMnO_{3-δ} enthält.

5. Glasfrittensystem nach Anspruch 1, wobei bezogen auf das Gesamtgewicht des Glasfrittensystems:
das Vehikel zu 3,5-80 Gew.-% enthalten ist,
die Glasfritte zu 18,5-95 Gew.-% enthalten ist,
der farbige CTE-Modifikator mit 0,5-50 Gew.-% enthalten ist und
das Pigment mit 1-50 Gew.-% enthalten ist.

6. Glasfrittensystem nach Anspruch 1, das außerdem ein oder mehrere von einem Füllstoff, einem Reduktionsmittel, einem Dispergiermittel/Tensid, einem rheologischen Modifikator, einer Fließhilfe, einem Haftvermittler oder einem Stabilisator enthält.

7. Verfahren zur Herstellung eines emaillierten Substrats, umfassend:
Bereitstellen eines Substrats;
Bereitstellen eines Glasfrittensystems, das einen Träger, eine Glasfritte, einen farbigen CTE-Modifikator und ein Pigment enthält, wobei der farbige CTE-Modifikator enthält:
ein modifiziertes Material vom Pseudo-Brookit-Typ mit einer Formel Al₂TiO₅, wobei AI und/oder Ti teilweise durch ein oder mehrere färbende Ionen, einschließlich Fe, Cr, Mn, Co, Ni und Cu, substituiert sind;
ein modifiziertes Material vom Cordierit-Typ mit der Formel Mg₂Al₄Si₅O₁₈, wobei Mg und/oder Al teilweise durch eines oder mehrere der färbenden Ionen ersetzt sind;
ein Material vom Perowskit-Typ mit der Formel Sm₁₋ₓSrₓMnO_{3-δ}, wobei x=0,0-0,5 und δ=0,0-0,25 oder eine modifizierte Version des Materials vom Perowskit-Typ, worin Sr teilweise durch Ba und/oder Ca substituiert ist;
oder Kombinationen davon;
Aufbringen des Glasfrittensystems auf das Substrat;
Brennen des Glasfritten-Systems, um dadurch eine farbige, an dem Substrat haftende Emaille zu bilden.

8. Verfahren nach Anspruch 7, wobei:
der CTE-Modifikator das modifizierte Material vom Pseudo-Brookit-Typ enthält; und
das modifizierte Material vom Pseudo-Brookit-Typ eine Formel Al₂₋ₓMₓTiO₅ hat, wobei M ein oder mehrere farbgebende Ionen enthält und x 0,1-2,0 ist oder eine Formel Al₂Ti₁₋ₓMₓO₅ hat, wobei M ein oder mehrere der farbgebenden Ionen enthält und x 0,01-0,4 ist.

9. Verfahren nach Anspruch 7, wobei:
der CTE-Modifikator das modifizierte Material vom Cordierit-Typ enthält; und
das modifizierte Material vom Cordierit-Typ die Formel Mg₂₋ₓAl_{4-y}M_{x+y}Si₅O₁₈ hat, wobei M eines oder mehrere der farbgebenden Ionen ist und x+y 0,1-3,0 ist.

10. Verfahren nach Anspruch 7, wobei der CTE-Modifikator das Material vom Perowskit-Typ mit der Formel Sm₁₋ₓSrₓMnO_{3-δ} enthält.

11. Verfahren nach Anspruch 7, wobei bezogen auf das Gesamtgewicht des Glasfritten-Systems:
das Vehikel zu 3,5-80 Gew.-% enthalten ist,
die Glasfritte zu 18,5-95 Gew.-% enthalten ist,
der farbige CTE-Modifikator mit 0,5-50 Gew.-% enthalten ist und
das Pigment mit 1-50 Gew.-% enthalten ist.

12. Verfahren nach Anspruch 7, wobei das Glasfrittensystem ferner einen oder mehrere von einem Füllstoff, einem Reduktionsmittel, einem Dispergiermittel/Tensid, einem rheologischen Modifikator, einer Fließhilfe, einem Haftvermittler oder einem Stabilisator enthält.

13. Verfahren nach Anspruch 7, wobei das Substrat Glas ist.

## Revendications

1. Système de fritte de verre pour former un émail adhérant à un substrat, incluant un véhicule, une fritte de verre, un modificateur d'ECT coloré, et en option un ou plusieurs pigments, le modificateur d'ECT coloré incluant :
un matériau modifié de type Pseudo-Brookite ayant une formule Al₂TiO₅, dans lequel Al et/ou Ti sont partiellement substitués par un ou plusieurs ions colorants, incluant Fe, Cr, Mn, Co, Ni et Cu ;
un matériau de type cordiérite modifié ayant une formule Mg₂Al₄Si₅O₁₈, dans lequel Mg et/ou Al est partiellement remplacé par un ou plusieurs des ions colorants ;
un matériau de type Pérovskite ayant une formule Sm₁₋ₓSrₓMnO_{3-δ}, où x=0,0-0,5 et δ =0,0-0,25, ou une version modifiée du matériau de type Pérovskite dans laquelle Sr est partiellement remplacé par Ba et/ou Ca ;
ou des combinaisons de ceux-ci.

2. Système de fritte de verre selon la revendication 1, dans lequel :
le modificateur d'ECT inclue le matériau de type Pseudo-Brookite modifié ; et
le matériau de type Pseudo-Brookite modifié a une formule Al₂₋ₓMₓTiO₅, où M inclue un ou plusieurs des ions colorants, et x est de 0,1-2, ou a une formule Al₂Ti₁₋ₓMₓO₅, où M inclue un ou plusieurs des ions colorants et x est de 0,01-0,4.

3. Système de fritte de verre selon la revendication 1, dans lequel :
le modificateur d'ECT inclue le matériau de type Cordiérite modifié ; et
le matériau de type Cordiérite modifié a une formule Mg₂₋ₓAl_{4-y}M_{x+y}Si₅O₁₈, où M est un ou plusieurs des ions colorants, et x+y est de 0,1-3,0.

4. Le système de fritte de verre selon la revendication 1, dans lequel le modificateur d'ECT inclue le matériau de type Pérovskite ayant la formule Sm₁₋ₓSrₓMnO_{3-δ}.

5. Système de fritte de verre selon la revendication 1, dans lequel, par rapport au poids total du système de fritte de verre :
le véhicule est inclus à 3,5-80 % en poids,
la fritte de verre est incluse à 18,5-95 % en poids,
le modificateur d'ECT coloré est inclus à 0,5-50 % en poids, et
le pigment est inclus à 1-50 % en poids.

6. Le système de fritte de verre selon la revendication 1, incluant en outre un ou plusieurs d'une charge, d'un agent réducteur, d'un dispersant/surfactant, d'un modificateur rhéologique, d'une aide à l'écoulement, d'un promoteur d'adhérence ou d'un stabilisateur.

7. Méthode pour former un substrat émaillé, comprenant :
fournir un substrat ;
fournir un système de fritte de verre incluant un véhicule, une fritte de verre, un modificateur d'ECT coloré et un pigment, le modificateur d'ECT coloré incluant :
un matériau modifié de type Pseudo-Brookite ayant une formule Al₂TiO₅, où Al et/ou Ti sont partiellement substitués par un ou plusieurs ions colorants, incluant Fe, Cr, Mn, Co, Ni et Cu ;
un matériau de type Cordiérite modifié ayant une formule Mg₂Al₄Si₅O₁₈, où Mg et/ou Al sont partiellement substitués par un ou plusieurs ions colorants ;
un matériau de type pérovskite ayant une formule Sm₁₋ₓSrₓMnO_{3-δ}, où x=0,0-0,5 et δ =0,0-0,25, ou une version modifiée du matériau de type pérovskite où Sr est partiellement remplacé par Ba et/ou Ca ;
ou des combinaisons de ceux-ci ;
appliquer le système de frittes de verre sur le substrat ;
cuisson du système de frittes de verre pour ainsi former un émail coloré adhérant au substrat.

8. Méthode selon la revendication 7, dans laquelle :
le modificateur d'ETC inclue le matériau de type Pseudo-Brookite modifié ; et
le matériau de type Pseudo-Brookite modifié a une formule Al₂₋ₓMₓTiO₅, où M inclue un ou plusieurs ions colorants, et x est de 0,1-2,0, ou a une formule Al₂Ti₁₋ₓMₓO₅, où M comprend un ou plusieurs ions colorants, et x est de 0,01-0,4.

9. Méthode selon la revendication 7, dans laquelle :
le modificateur d'ECT inclue le matériau de type Cordiérite modifié ; et
le matériau de type Cordiérite modifié a une formule Mg₂₋ₓAl_{4-y}M_{x+y}Si₅O₁₈, où M est un ou plusieurs des ions colorants, et x+y est de 0,1-3,0.

10. Méthode selon la revendication 7, dans laquelle le modificateur d'ECT inclue le matériau de type Pérovskite ayant la formule Sm₁₋ₓSrₓMnO_{3-δ}.

11. Méthode selon la revendication 7, dans laquelle par rapport au poids total du système de fritte de verre :
le véhicule est inclus à 3,5-80 % en poids,
la fritte de verre est incluse à 18,5-95 % en poids,
le modificateur CTE coloré est inclus à 0,5-50 % en poids, et
le pigment est inclus à 1-50 % en poids.

12. Méthode selon la revendication 7, dans laquelle le système de fritte de verre inclue en outre un ou plusieurs d'une charge, d'un agent réducteur, d'un dispersant/surfactant, d'un modificateur rhéologique, d'une aide à l'écoulement, d'un promoteur d'adhérence ou d'un stabilisateur.

13. Méthode selon la revendication 7, dans laquelle le substrat est du verre.
